# FASCICULE DE BREVET EUROPEEN

(11) **EP 2 162 623 B1**
(45) Date de publication et mention de la délivrance du brevet: **14.12.2011**
(21) Numéro de dépôt: 08806150.2
(22) Date de dépôt: 01.07.2008
(51) Int. Cl.: F16B 5/06, F16B 21/08

(54) **PIECE DE LIAISON POUR LE MONTAGE ET LE DEMONTAGE D'UN ACCESSOIRE AMOVIBLE SUR UNE STRUCTURE DE SUPPORT FIXE**
KUPPLUNGSTEIL ZUR BEFESTIGUNG UND ENTNAHME EINES ABNEHMBAREN ZUBEHÖRTEILS IN ZUSAMMENHANG MIT EINER STATIONÄREN TRÄGERSTRUKTUR
COUPLING PART FOR MOUNTING AND REMOVING A REMOVABLE ACCESSORY IN RELATION TO A STATIONARY SUPPORTING STRUCTURE

(30) Priorité: 09.07.2007 FR 0756338
(43) Date de publication de la demande: 17.03.2010
(73) Titulaire: Peugeot Citroën Automobiles SA, 78140 Vélizy-Villacoublay (FR)
(72) Inventeur: BESSON, Jack, F-78200 Mantes La Jolie (FR)
(86) Numéro de dépôt international: PCT/FR2008/051226
(87) Numéro de publication internationale: WO 2009/007644

(56) Documents cités:
- EP-A- 0 319 370
- EP-A- 1 291 534
- FR-A- 2 887 306

## Description

La présente invention est relative à une pièce de liaison permettant d'assurer de manière sûre, rapide et simple, le montage et/ou la séparation d'un accessoire amovible vis-à-vis d'une structure de support fixe sur laquelle cet accessoire peut être temporairement rapporté et le cas échéant démonté par la suite, au gré d'un utilisateur, conformément à le préambule de la revendication 1 (FR 2 887 306 A).

Notamment, bien que cette application n'ait aucun caractère exclusif et ne présente pas d'incidence sur les caractéristiques propres de la pièce de liaison, l'invention peut, à titre non limitatif et sans préjudice d'autres utilisations, permettre d'assurer le montage d'un écran de protection sous le plancher horizontal de l'habitacle d'un véhicule automobile, ou encore la fixation d'un bac ou organe de réception similaire contre la paroi verticale du coffre de ce véhicule pour le rangement d'objets divers à transporter, cet écran ou ce bac pouvant être aisément solidarisé ou séparé du plancher horizontal ou de la paroi verticale après usage.

L'invention concerne plus particulièrement une pièce de liaison fournie séparément à l'utilisateur avec l'accessoire à monter sur la structure de support, comportant principalement un élément de blocage et un organe de manoeuvre propre à la mise en oeuvre de cet élément de blocage fonctionnant à la manière d'un clip, pour la fixation de l'accessoire sur cette structure, cet organe pouvant être facilement séparé de cet élément une fois celui-ci mis en place et éventuellement réutilisé ultérieurement selon un processus inverse pour provoquer cette fois la séparation de l'accessoire et de la structure après retrait de l'élément de blocage.

A cet effet, la pièce de liaison considérée, pour assurer le montage et/ou le démontage d'un accessoire amovible sur ou vis-à-vis d'une structure de support fixe, l'accessoire comportant une paroi plane apte à être étroitement appliquée et maintenue contre une paroi également plane de la structure, se caractérise en ce qu'elle comprend :
- d'une part, un élément de blocage en un matériau souple et déformable, de révolution autour d'un axe central, comportant un embout conique comportant axialement une extrémité ouverte et une extrémité fermée opposée, cet élément étant apte à traverser des passages prévus en regard, respectivement dans l'accessoire amovible et dans la structure de support fixe, l'embout conique de l'élément de blocage comportant au moins deux languettes extérieures, élastiques, disposées symétriquement autour de l'axe central, ces languettes étant liées à l'embout conique à une de leurs extrémités et libres à leur autre extrémité,
- d'autre part, un organe de manoeuvre comportant une tige allongée, apte à coulisser à l'intérieur de l'élément de blocage selon la direction de son axe central, comportant un doigt d'actionnement venant en contact avec l'extrémité fermée de l'embout conique pour exercer sur celui-ci un effort de poussée déformant partiellement cet embout en permettant aux extrémités libres des languettes élastiques de se rapprocher radialement dans une position où l'élément peut traverser les passages en regard de l'accessoire et de la structure de support, puis de s'écarter mutuellement au-delà lorsque cet effort de poussée est relâché afin d'immobiliser ensemble l'accessoire et la structure, la tige allongée comportant en partie intermédiaire une rotule porteuse, sphérique, propre à coopérer avec l'élément de blocage, le retrait de l'organe de manoeuvre s'effectuant par coulissement en sens inverse de sa tige allongée selon l'axe central de l'embout conique en faisant échapper la rotule à l'extrémité ouverte de cet embout.

Selon une autre caractéristique de la pièce de liaison, l'élément de blocage présente à l'extrémité ouverte de l'embout conique, une partie légèrement rétreinte vers l'axe central pour améliorer le maintien de la rotule porteuse de l'organe de manoeuvre à l'intérieur de l'embout conique avant retrait de cet organe.

De préférence, l'élément de blocage comporte deux languettes élastiques, diamétralement opposées par rapport à l'axe central de l'embout conique.

De façon également préférée, cet élément comporte une collerette périphérique, propre à servir d'appui sur l'accessoire pour l'appliquer contre le support fixe, cette collerette étant prévue sensiblement à l'aplomb de l'extrémité des languettes élastiques.

Selon le cas, la collerette périphérique comporte des évidements en forme d'échancrures ou de passages fermés, symétriques par rapport à l'axe central de l'élément de blocage, au droit de l'extrémité des languettes élastiques.

Avantageusement, l'élément de blocage est réalisé en caoutchouc naturel ou synthétique.

Selon une autre caractéristique particulière, la rotule porteuse est moulée directement avec l'organe de manoeuvre, entre le doigt d'actionnement et la tige allongée. En variante, la rotule peut être vissée sur le doigt.

D'autres caractéristiques d'une pièce de liaison établie conformément à l'invention, apparaîtront encore à travers la description qui suit d'un exemple de réalisation, donné à titre indicatif et non limitatif, en référence aux dessins annexés sur desquels :
- La Figure 1 est une vue en perspective illustrant l'élément de blocage de la pièce de liaison, selon un premier mode de réalisation où sa collerette périphérique est échancrée au droit de ses languettes élastiques.
- La Figure 2 est une vue en coupe transversale par un plan axial, illustrant la pièce de liaison avec son élément de blocage selon la Figure 1, monté sur son organe de manoeuvre.
- La Figure 3 est une vue en perspective de l'élément de blocage de la pièce de liaison, selon un second mode de réalisation où sa collerette périphérique est évidée au droit de ses languettes élastiques.
- La Figure 4 est une vue en coupe axiale qui reprend les dispositions de la Figure 2 mais appliquées à l'élément de blocage selon la Figure 3.
- La Figure 5 est une vue en coupe sur laquelle l'élément de blocage de la pièce de liaison est amenée en regard de la structure de support, dans une position où son organe de manoeuvre exerce une poussée axiale.
- La Figure 6 est une vue en coupe, analogue à celle de la Figure 5, illustrant la position de la pièce de liaison, une fois l'accessoire monté et immobilisé sur la structure de support.
- La Figure 7 est une vue en coupe illustrant le retrait de l'organe de manoeuvre, l'accessoire restant en place sur le support fixe jusqu'à son démontage par le processus inverse.
- La Figure 8 est une vue schématique en perspective d'un exemple de mise en oeuvre de la pièce de liaison illustrée sur les Figures 1 à 7 pour solidariser un bac de réception d'objets quelconques vis-à-vis de la paroi verticale d'un coffre de véhicule automobile.
- La Figure 9 une possibilité de stockage du bac de la Figure 8, hors du véhicule en utilisant la même pièce de liaison.

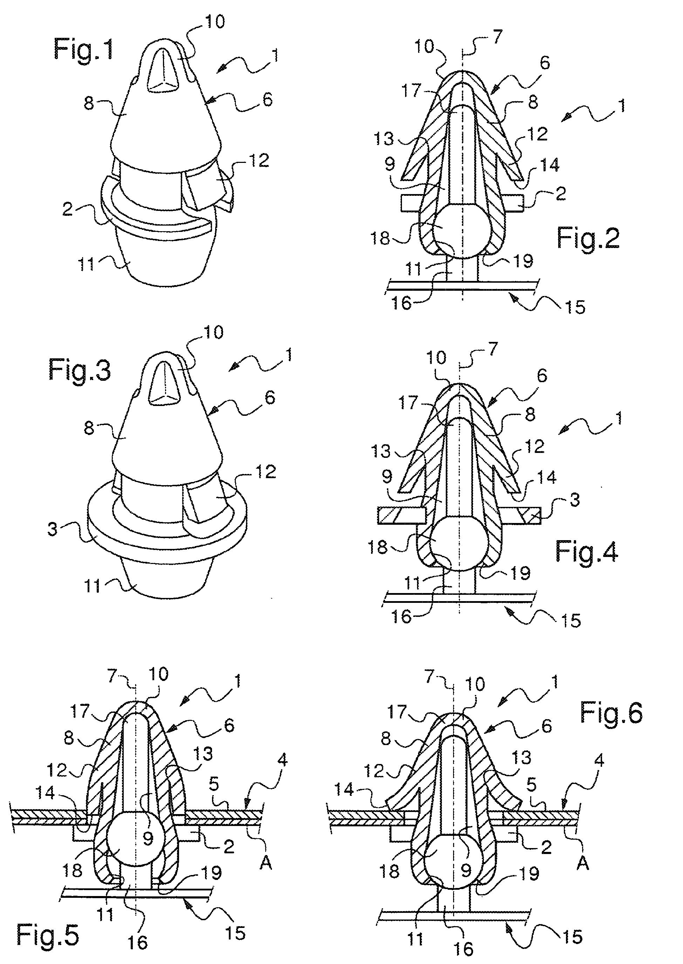

Les Figures 1 à 4 illustrent une pièce de liaison 1 conforme à l'invention, les vues en perspective des Figures 1 et 3 montrant qu'elle comporte une collerette périphérique 2 en saillie externe avec des parties évidées 3 qui se présentent, soit sous la forme d'échancrures ouvertes vers l'extérieur (Figure 1), soit comme des passages fermés latéralement (Figure 3), cette collerette 2 étant destinée à venir appliquer étroitement un accessoire A contre une structure de support fixe 4 (apparaissant sur les Figures 5 à 7) et qui comporte à son tour une paroi également plane 5, apte à être mise en contact avec cet accessoire de la façon décrite plus loin.

La pièce de liaison 1 comporte un élément de blocage 6, de révolution autour d'un axe central 7, constitué d'un embout conique 8 en un matériau souple et élastique, de préférence en caoutchouc naturel ou synthétique approprié pour lui permettre de subir une déformation momentanée lorsqu'un effort est exercé sur cet embout selon la direction de l'axe 7.

L'embout 8 présente une partie interne creuse 9, une extrémité fermée 10 et, à l'opposé, une extrémité ouverte 11.

L'embout conique 8 comporte par ailleurs, dans la surface externe de l'élément de blocage 6, des languettes 12, au nombre de deux dans l'exemple ici considéré, diamétralement opposées l'une à l'autre par rapport à l'axe 7, chacune de ces languettes comportant une extrémité 13 de liaison avec l'embout 8 et, à l'opposé, une extrémité libre 14, susceptible de fléchir radialement de la façon précisée plus loin. Ces deux languettes 12 ont leurs extrémités libres 14 en regard et à l'aplomb des parties évidées 3 en forme d'évidements ou d'échancrures de la collerette externe 2

La pièce de liaison 1 comporte par ailleurs, associé à l'élément de blocage 6 ainsi constitué, un organe de manoeuvre 15 comportant une tige allongée 16, cette tige présentant une extrémité effilée formant doigt d'actionnement 17 et entre ce doigt et la partie courante de la tige, une rotule porteuse 18, sphérique, rigide, venue de moulage avec la tige 16 et le doigt 17 ou le cas échéant vissée sur cette tige avec le doigt.

Lorsque l'organe de manoeuvre 15 est engagé dans la partie interne 9 de l'embout conique 8 de la pièce de blocage 6, le doigt d'actionnement 17 ayant son extrémité opposée à la rotule 18 disposée en regard de l'extrémité fermée 10 de l'embout 8. En outre, dans cette même position, l'extrémité ouverte 11 de l'embout est agencée pour assurer le support de la rotule 18, en présentant par exemple à cet effet une partie 19 légèrement rétreinte vers la partie interne 9 de l'embout.

La mise en oeuvre de la pièce de liaison 1 conforme à l'invention s'effectue de la manière illustrée sur les Figure 2 et 4 à 7.

Initialement, la rotule porteuse 18 de l'organe de manoeuvre 15, une fois celui-ci engagé selon l'axe 7 à l'intérieur de l'embout conique 8 de l'élément de blocage 6, est maintenue dans la partie inférieure de cet embout, au droit de son extrémité ouverte 11.

La pièce de liaison 1 fonctionnant à la manière d'un clip, on engage l'élément de blocage 6 dans un passage formé par un perçage 20 prévu dans la paroi 5 de la structure de support 4, disposé en regard d'un autre perçage 21 d'un accessoire quelconque A à fixer contre cette paroi 5 et placé contre celle-ci, les languettes élastiques 12 prévues dans la surface externe de l'embout conique 8 fléchissant convenablement en direction de l'axe central 7 à la traversée de ces deux perçages 20 et 21, en même temps que la collerette 2 de l'élément de blocage 6 s'applique contre l'accessoire A pour le maintenir en contact avec la paroi 5.

Dans cette position, on exerce sur l'extrémité fermée 10 de l'embout conique 8 un effort de poussée axial par le doigt d'actionnement 17 de l'organe de manoeuvre 15 qui allonge et déforme momentanément l'embout en permettant à l'extrémité libre 14 des languettes 12 de se placer au-delà de la paroi plane 5 de la structure de support fixe 4, puis de s'écarter librement une fois les perçages 20 et 21 franchis, l'élément de blocage 6 immobilisant alors l'accessoire amovible A avec cette structure 4 par ses languettes 12 en combinaison avec sa collerette d'appui 2, dès que l'effort de poussée est relâché, comme illustré sur la Figure 6.

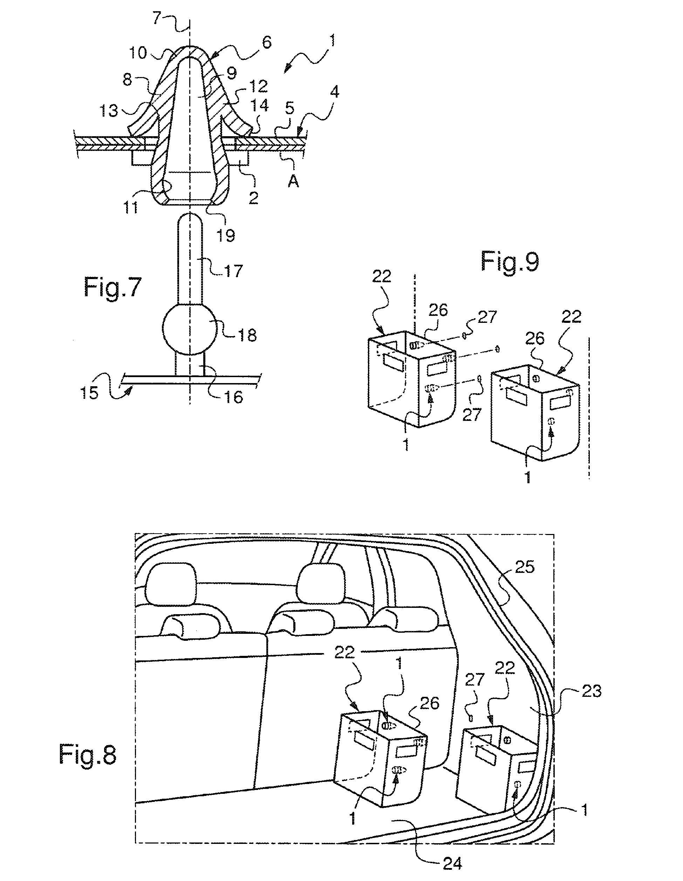

Dans l'étape suivante, l'organe de manoeuvre 15 peut être extrait de l'élément de blocage 6 par l'extrémité ouverte 11 de l'embout conique 8, la rotule porteuse 18 échappant à la partie rétreinte 19 prévue au droit de cette extrémité et légèrement rétreinte vers l'intérieur de l'embout, l'accessoire A ainsi désolidarisé de la structure de support 4, comme illustré sur la Figure 7.

La Figure 8 illustre, à titre purement indicatif, un exemple de réalisation adapté au cas où l'accessoire amovible A est constitué par un bac ou réceptacle similaire 22, par exemple une boîte à outils ou une trousse d'infirmerie, que l'on souhaite monter temporairement sur une paroi verticale 23, délimitant ici l'intérieur du coffre 24 ménagé à l'arrière de l'habitacle 25 d'un véhicule automobile.

Dans ce cas particulier, le bac 22 est fourni en étant directement équipé, dans une de ses faces planes 26, de pièces de liaison 1 conformes à l'invention, permettant d'assurer son montage contre la paroi verticale 23 du coffre formant la structure de support fixe, cette paroi comportant à cet effet des perçages 27 où s'engagent les éléments de blocage de ces pièces de liaison, mis en place dans ces perçages par l'organe de manoeuvre associé à chacun de ces éléments de la manière décrite précédemment. Une opération inverse permet, au gré de l'utilisateur, de désolidariser le bac 22 de la paroi du coffre en procédant comme indiqué au retrait des pièces de liaison, ce bac pouvant ensuite et exactement de la même façon (Figure 9), être rendu solidaire d'une autre structure de support à l'aide d'autres pièces de liaison, voire des mêmes, par exemple d'un mur ou d'une paroi appropriée dans un garage ou similaire, sans avoir à vider ce bac ou cette boîte de son contenu.

On réalise ainsi un ensemble de conception très simple, susceptible d'équiper directement un accessoire amovible à monter sur une structure de support fixe, avec les moyens nécessaires à la liaison de l'un sur l'autre, l'élément de blocage restant en place aussi longtemps que souhaité une fois l'organe de manoeuvre qui lui est associé extrait de cet élément.

A l'inverse, lorsque l'accessoire doit être démonté, la mise en oeuvre de l'organe de manoeuvre selon un processus inverse permet de retirer l'élément de blocage, en le désolidarisant de la structure de support et en permettant de libérer l'accessoire, ceci autant de fois successives que désiré.

Bien entendu, il va de soi que l'invention ne se limite pas à l'exemple de réalisation et de mise en oeuvre envisagé ci-dessus ; elle en embrasse au contraire toutes les variantes. Notamment, la pièce de liaison opposée peut trouver de multiples autres applications, en particulier dans l'industrie automobile, pour solidariser un écran de protection avec la face inférieure du plancher de l'habitacle d'un véhicule.

## Revendications

1. - Pièce de liaison destinée à assurer le montage et/ou le démontage d'un accessoire amovible (A) sur ou vis-à-vis d'une structure de support fixe (4), l'accessoire comportant une paroi plane apte à être étroitement appliquée et maintenue contre une paroi également plane (5) de la structure, **caractérisée en ce qu'**elle comprend :
- d'une part, un élément de blocage (6) en un matériau souple et déformable, de révolution autour d'un axe central (7), comportant un embout conique (8) comportant axialement une extrémité ouverte (11) et une extrémité fermée (10) opposée, cet élément étant apte à traverser des passages (20,21) prévus en regard, respectivement dans l'accessoire amovible (A) et dans la structure de support fixe (4),
- d'autre part, un organe de manoeuvre (15) comportant une tige allongée (16), apte à coulisser à l'intérieur de l'élément de blocage (6) selon la direction de son axe central (7), comportant un doigt d'actionnement (17) venant en contact avec l'extrémité fermée (10) de l'embout conique (8) pour exercer sur celui-ci un effort de poussée déformant partiellement cet embout en permettant aux extrémités libres (14) des languettes élastiques (12) de se rapprocher radialement dans une position où l'élément peut traverser les passages en regard (20,21) de l'accessoire (A) et de la structure de support (4), puis de s'écarter mutuellement au-delà lorsque cet effort de poussée est relâché afin d'immobiliser ensemble l'accessoire et la structure,
**caractérisée en ce que** l'embout conique de l'élément de blocage comportant au moins deux languettes extérieures (12), élastiques, disposées symétriquement autour de l'axe central (7), ces languettes étant liées à l'embout conique (8) à une de leurs extrémités (13) et libres à leur autre extrémité (14), et la tige allongée (16) comportant en partie intermédiaire une rotule porteuse (18), sphérique, propre à coopérer avec l'élément de blocage (6), le retrait de l'organe de manoeuvre (15) s'effectuant par coulissement en sens inverse de sa tige allongée selon l'axe central (7) de l'embout conique (8) en faisant échapper la rotule à l'extrémité ouverte de cet embout.

2. - Pièce de liaison selon la revendication 1, **caractérisée en ce que** l'élément de blocage (6) présente à l'extrémité ouverte (11) de l'embout conique (8), une partie (19) légèrement rétreinte vers l'axe central (7) pour améliorer le maintien de la rotule porteuse (18) de l'organe de manoeuvre (15) à l'intérieur de l'embout conique avant retrait de cet organe.

3. - Pièce de liaison selon l'une des revendications 1 ou 2, **caractérisée en ce que** l'élément de blocage (6) comporte deux languettes élastiques (12), diamétralement opposées par rapport à l'axe central (7) de l'embout conique (8).

4. - Pièce de liaison selon l'une quelconque des revendications 1 à 3, **caractérisée en ce que** l'élément de blocage (6) comporte une collerette périphérique (2), propre à servir d'appui sur l'accessoire (A) pour l'appliquer contre le support fixe (4), cette collerette (2) étant prévue sensiblement à l'aplomb de l'extrémité des languettes élastiques (12).

5. - Pièce de liaison selon la revendication 4, **caractérisée en ce que** la collerette périphérique (2) comporte des évidements (3) en forme d'échancrures ou de passages fermés, symétriques par rapport à l'axe central (7) de l'élément de blocage (6), au droit de l'extrémité des languettes élastiques (12).

6. - Pièce de liaison selon l'une quelconque des revendications 1 à 5, **caractérisée en ce que** l'élément de blocage (6) est réalisé en caoutchouc naturel ou synthétique.

7. - Pièce de liaison selon l'une quelconque des revendications 1 à 6, **caractérisée en ce que** la rotule porteuse (18) est moulée directement avec l'organe de manoeuvre (15), entre le doigt d'actionnement (17) et la tige allongée (16).

8. - Pièce de liaison selon l'une quelconque des revendications 1 à 6, **caractérisée en ce que** la rotule porteuse (18) est vissée sur le doigt d'actionnement (17).

## Claims

1. A coupling part intended to ensure the mounting and/or the dismantling of a detachable accessory (A) on or with respect to a fixed support structure (4), the accessory comprising a flat wall suited to be closely applied and held against a likewise flat wall (5) of the structure, **characterized in that** it includes:
- on the one hand, a locking element (6) of a flexible and deformable material, revolving about a central axis (7), comprising a conical end piece (8) comprising axially an open end (11) and an opposing closed end (10), this element being suited to pass through passages (20, 21) which are provided opposite, respectively in the detachable accessory (A) and in the fixed support structure (4),
- on the other hand, a manoeuvring member (15) comprising an elongated rod (16) suited to slide in the interior of the locking element (6) along the direction of its central axis (7), comprising an actuating finger (17) coming in contact with the closed end (10) of the conical end piece (8) to exert thereon a thrust force partially deforming this end piece, allowing the free ends (14) of the elastic tongues (12) to move radially toward one another in a position in which the element can pass through the opposite passages (20, 21) of the accessory (A) and of the support structure (4), then to move mutually apart further when this thrust force has abated so as to immobilise together the accessory and the structure,
**characterized in that** the conical end piece of the locking element comprising at least two exterior tongues (12) which are elastic, disposed symmetrically about the central axis (7), these tongues being linked to the conical end piece (8) at one of their ends (13) and free at their other end (14), and the elongated rod (16) comprising in the intermediate part a carrier swivel (18) which is spherical, suited to cooperate with the locking element (6), the withdrawal of the manoeuvring member (15) being carried out by sliding in the opposite direction of its elongated rod along the central axis (7) of the conical end piece (8), causing the swivel to escape at the open end of this end piece.

2. The coupling part according to Claim 1, **characterized in that** the locking element (6) has at the open end (11) of the conical end piece (8) a part (19) which is slightly necked-in towards the central axis (7) to improve the holding of the carrier swivel (18) of the manoeuvring member (15) in the interior of the conical end piece before withdrawal of this member.

3. The coupling part according to one of Claims 1 or 2, **characterized in that** the locking element (6) comprises two elastic tongues (12), diametrically opposed with respect to the central axis (7) of the conical end piece (8).

4. The coupling part according to any one of Claims 1 to 3, **characterized in that** the locking element (6) comprises a peripheral flange (2), suited to serve as support on the accessory (A) to apply it against the fixed support (4), this flange (2) being provided substantially perpendicular to the end of the elastic tongues (12).

5. The coupling part according to Claim 4, **characterized in that** the peripheral flange (2) comprises recesses (3) in the form of notches or closed passages, which are symmetrical with respect to the central axis (7) of the locking element (6) at right angles to the end of the elastic tongues (12).

6. The coupling part according to any one of Claims 1 to 5, **characterized in that** the locking element (6) is made of natural or synthetic rubber.

7. The coupling part according to any one of Claims 1 to 6, **characterized in that** the carrier swivel (18) is moulded directly with the manoeuvring member (15), between the actuating finger (17) and the elongated rod (16).

8. The coupling part according to any one of Claims 1 to 6, **characterized in that** the carrier swivel (18) is screwed on the actuating finger (17).

## Patentansprüche

1. Verbindungsteil, der dazu bestimmt ist, die Montage und/oder die Demontage eines abnehmbaren Zubehörs (A) auf oder gegenüber einer stationären Stützstruktur (4) sicherzustellen, wobei das Zubehör eine ebene Wand aufweist, die eng gegen eine Wand (5), die ebenfalls eben ist, der Struktur angelegt und gehalten werden kann, **dadurch gekennzeichnet, dass** er Folgendes aufweist:
- einerseits ein Blockierelement (6) aus einem biegsamen und verformbaren Werkstoff, in Rotation um eine zentrale Achse (7), das einen kegelförmigen Ansatz (8) aufweist, der axial ein offenes Ende (11) und ein entgegen gesetztes geschlossenes Ende (10) hat, wobei dieses Element Durchgänge (20, 21) durchqueren kann, die gegenüberliegend jeweils in dem abnehmbaren Zubehör (A) und in der stationären Stützstruktur (4) vorgesehen sind,
- andererseits ein Handhabungsorgan (15), das einen länglichen Schaft (16) aufweist, der im Inneren des Blockierelements (16) entlang der Richtung seiner zentralen Achse (7) gleiten kann, das einen Betätigungsfinger (17) aufweist, der mit dem geschlossenen Ende (10) des kegelförmigen Ansatzes (8) in Berührung kommt, um auf dieses eine Schubkraft auszuüben, die diesen Ansatz teilweise verformt, indem es den freien Enden (14) der elastischen Laschen (12) erlaubt wird, sich radial in einer Position zu nähern, in der das Element die gegenüber liegenden Durchgänge (20, 21) des Zubehörs (A) und der Stützstruktur (4) durchqueren und sich dann gegenseitig darüber hinaus beabstanden können, wenn diese Schubkraft aufhört, um gemeinsam das Zubehör und die Struktur stillzustellen, **dadurch gekennzeichnet, dass** der kegelförmige Ansatz des Blockierelements mindestens zwei äußere elastische Laschen (12) aufweist, die symmetrisch um die zentrale Achse (7) angeordnet sind, wobei diese Laschen mit dem kegelförmigen Ansatz (8) an einem ihrer Enden (13) verbunden und an ihrem anderen Ende (14) frei sind, wobei der längliche Schaft (16) im Zwischenteil ein kugelförmiges Traggelenk (18) aufweist, das mit dem Blockierelement (6) zusammenwirken kann, wobei das Zurückziehen des Handhabungselements (15) durch Gleiten in umgekehrte Richtung seines länglichen Schafts entlang der zentralen Achse (7) des kegelförmigen Ansatzes (8) erfolgt, indem man das Gelenk an dem offenen Ende des Ansatzes austreten lässt.

2. Verbindungsteil nach Anspruch 1, **dadurch gekennzeichnet, dass** das Blockierelement (6) an dem offenen Ende (11) des kegelförmigen Ansatzes (8) einen leicht zu der zentralen Achse (7) eingeschnürten Teil (19) aufweist, um das Halten des Traggelenks (18) des Handhabungsorgans (15) in dem Inneren des kegelförmigen Ansatzes vor dem Herausziehen dieses Organs zu verbessern.

3. Verbindungsteil nach einem der Ansprüche 1 oder 2, **dadurch gekennzeichnet, dass** das Blockierelement (6) zwei elastische Laschen (12) aufweist, die in Bezug zu der zentralen Achse (7) des kegelförmigen Ansatzes (8) diametral entgegengesetzt sind.

4. Verbindungsteil nach einem der Ansprüche 1 bis 3, **dadurch gekennzeichnet, dass** das Blockierelement (6) einen umfänglichen Kragen (2) aufweist, der auf dem Zubehör (A) als Auflage dienen kann um es gegen den stationären Träger (4) anzulegen, wobei dieser Kragen (2) im Wesentlichen in der Senkrechten des Endes der elastischen Laschen (12) vorgesehen ist.

5. Verbindungsteil nach Anspruch 4, **dadurch gekennzeichnet, dass** der umfängliche Kragen (2) Aussparungen (3) in Form von Ausschnitten oder von geschlossenen Durchgängen, die in Bezug zu der zentralen Achse (7) des Blockierelements (6) symmetrisch sind, im rechten Winkel zu dem Ende der elastischen Laschen (12) aufweist.

6. Verbindungsteil nach einem der Ansprüche 1 bis 5, **dadurch gekennzeichnet, dass** das Blockierelement (6) aus natürlichem oder synthetischem Kautschuk hergestellt ist.

7. Verbindungsteil nach einem der Ansprüche 1 bis 6, **dadurch gekennzeichnet, dass** das Traggelenk (18) direkt mit dem Handhabungsorgan (15) zwischen dem Betätigungsfinger (17) und dem länglichen Schaft (16) geformt ist.

8. Verbindungsteil nach einem der Ansprüche 1 bis 6, **dadurch gekennzeichnet, dass** das Traggelenk (18) auf den Betätigungsfinger (17) geschraubt ist.
